# EUROPEAN PATENT APPLICATION

(11) **EP 1 562 191 A2**
(43) Date of publication of application: **10.08.2005**
(21) Application number: 04256928.5
(22) Date of filing: 09.11.2004
(51) Int. Cl.: G11B 17/04

(54) **Ultraslim Slot-in type drive device**

(30) Priority: 05.02.2004 KR 2004007516
(71) Applicant: Raymedia Co. Ltd., Hwaseong-city, Gyeonggi-do 445-813 (KR)
(72) Inventor: Lee, Young, Hyundai APT., Suwon-si Gyeonggi-do 701-730 (KR)
(74) Representative: Cummings, Sean Patrick

(57) **Abstract**

In the present invention, a top link plate is separated from a main body such that when a recording medium is inserted, the top link plate is in an ascent state to prevent the recording medium from being jammed in a slot during delivery. The top link plate then descends to clamp the recording medium. Thus, no additional space is required for allowing the recording medium to be inserted into the slot without being jammed therein, and the device thickness is effectively slimmed.

## Description

### FIELD OF THE INVENTION

The present invention relates to an ultraslim slot-in type drive device reduced in thickness thereof.

### BACKGROUND OF THE INVENTION

In general, an optical-disk or a magnetic-disk is used as a disk type recording medium. The data of the optical-disk recording medium is readable and recordable via a beam, and the data of the magnetic-disk recording medium is readable and recordable via a phase-change of the disk surface by using a magnetic property.

The optical-disk recording medium comes in various sizes, principally as a Compact Disk (CD) and a Digital Versatile Disk (DVD).

The optical-disk recording medium records or reads desired information through a separate drive device and may be classified into an audio, video, or data recording usage, depending on the types of recorded signal and data contents.

The device, which drives the optical-disk recording medium, loads and rotates the recording medium and simultaneously moves an optical pick-up apparatus in order to read and record the signal. This device may be distinguished by a tray type and a slot-in type according to the method of loading the recording medium.

In the tray type, if a button is pressed, a tray protrudes out from the inside of the main body. Then, if a button is pressed after the recording medium is placed on the protruded tray, the tray withdraws back into the main body and loads the recording medium.

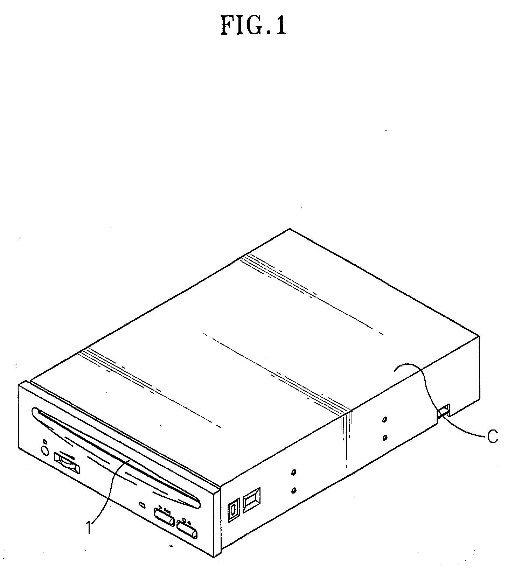

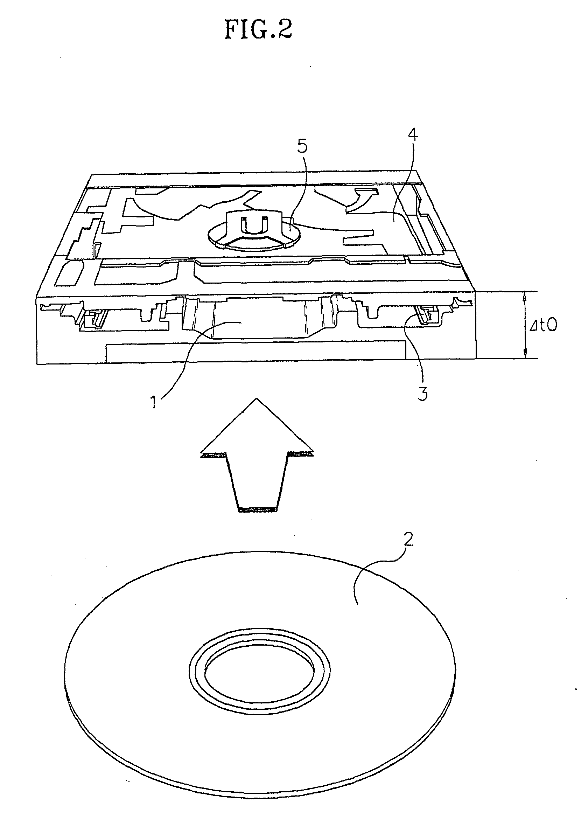

On the other hand, as illustrated in FIG 1, the slot-in type is formed at the front with a slot (without a tray) and its appearance is constituted by a box-shaped case C. With reference to FIG 2, if a recording medium 2 is inserted into a front slot 1, a sensor (not shown) installed at the inlet of the slot 1 detects the insertion of the recording medium 2. A moving mechanism 3 of the inside of the slot 1 starts the operation via electrical power and delivers the recording medium 2 into the slot.

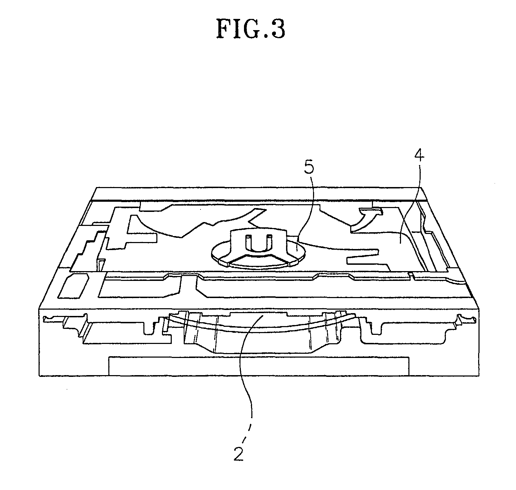

Referring to FIG 3, after the recording medium 2 is delivered inside the slot via the moving mechanism 3, a top link plate 4 descends and a clamp 5 disposed at the center of the top link plate 4 clamps the recording medium 2 downward. A turntable (not shown) rotates to spin the recording medium and an optical pick-up apparatus operates to read from or record the signal on the recording medium 2.

The slot-in type drive device constructed as above is thinner in thickness than the tray type since no separate tray is used. However, conventional slot-in type drive devices should maintain therein a space (Δt01) for allowing the top link plate 4 to vertically move in the device, and a space (Δt02) for installing the moving mechanism 3, which is activated via electrical power, thereby being limited in reducing its thickness (Δt0=Δt01+Δt02+Δt03, wherein Δt03 refers to the thickness of the recording medium).

By way of reference, the space where the top link plate 4 moves vertically is required to prevent the moving mechanism 3 and recording medium 2 from being jammed in the main body during their movements, substantially hindering the slot-in type device from reducing its thickness.

In today's electronic products, various functions have been combined, such as, a combination of a television set and optical-disk drive, a combination of an audio component and optical-disk drive, a combination of a video cassette player and optical-disk drive, a combination of a set-top box and optical-disk drive, a combination of a vehicle monitor and optical-disk drive and the like.

In order to utilize the limited space of the relevant electronic product, the slot-in type drive device is typically used as the drive of an optical-disk recording medium, which is adopted in the combinations of various electronic products described above.

Recent electronic products preferably tend to be lighter, slimmer and have less volume than conventional products, specializing in a light and compact structure.

However, there is a drawback in the optical-disk type drive device in that the structure of the inside mechanism is limited in reducing the thickness and thus, the structure must be modulated in order to diminish the thickness.

### SUMMARY OF THE INVENTION

Embodiments of the present invention provide an ultraslim slot-in type drive device reduced in thickness thereof.

In a preferred embodiment of the present invention, an ultraslim slot-in type drive device comprises a top link plate having a slot at one side through which a recording medium is inserted and exited and having a clamp for clamping the recording medium. A main body is separated from the top link plate and formed with a rotating means for spinning the recording medium. A control means is configured to control the top link plate to descend by detecting the insertion of the recording medium into the top link plate and to activate the rotating means, and is also configured to control the top link plate to ascend according to the input of the signal commanding the exit of the recording medium and to stop the activation of the rotating means. An ascent and descent means couples the top link plate to the main body for vertical movement and ascends and descends the top link plate according to the control of the control means.

The ascent and descent means includes a hinge coupling part pivotally fixing the top link plate to one end of the main body. An ascent and descent device pivots the top link plate from the main body. An ascent and descent driver activates the ascent and descent device according to the control of the control means.

The top link plate includes a moving means, which carries the recording medium between the inlet and the inside of the slot. The moving means includes a resilient member and a lever means, wherein the resilient member is equipped at the inside wall of the inlet of the slot and has a protruded part, which is configured to generate the resilient force toward both oblique directions and to contact the lateral surface of the recording medium, wherein both oblique parts are disposed to face the inlet and the inside of the slot, respectively, and the lever means pushes out the recording medium from the inside of the slot to the inlet direction.

### BRIEF DESCRIPTION OF THE DRAWINGS

For a better understanding of the nature and objects of the present invention, reference should be made to the following detailed description with the accompanying drawings, in which:
FIG 1 is an outer perspective view of a conventional typical slot-in type drive device;
FIG 2 illustrates a perspective view of FIG 1 with the case removed;
FIG 3 illustrates the inserted state of a recording medium in the device of FIG 2;
FIG 4 is an outer perspective view of an ultraslim slot-in type drive device according to an exemplary embodiment of the present invention;
FIG 5a illustrates a top link plate before a recording medium is inserted;
FIG 5b is a side view illustrating the principle part in relation to FIG 5a;
FIG 6 is a schematic block flowchart regarding the driving control circuit of the drive device, illustrated in FIG 4;
FIG 7a illustrates a recording medium inserted into a top link plate from the state of FIG 5a;
FIG 7b is a side view illustrating the principle part in relation to FIG 7a;
FIG 8a illustrates a top link plate descended from the state of FIG 7a;
FIG 8b is a side view illustrating the principle part in relation to FIG 8a; and
FIG 9 is a perspective view of an ultraslim slot-in type drive device according to another embodiment of the present invention.

### DETAILED DESCRIPTION OF THE PREFERRED EMBODIMENTS

A preferred embodiment of the present invention will now be described in detail with reference to the attached drawings.

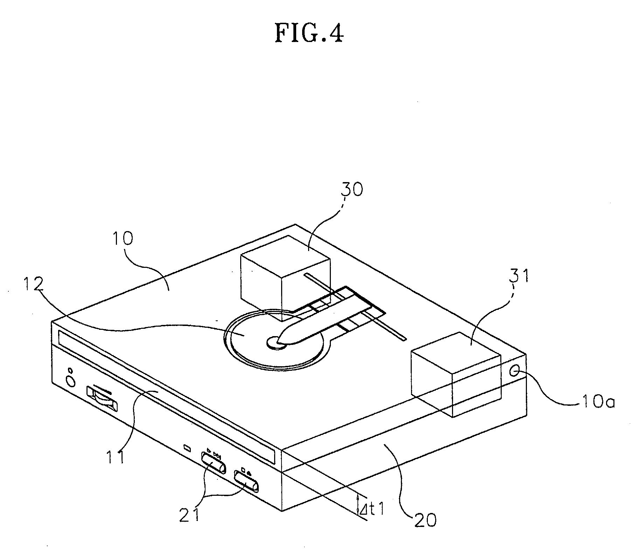

As shown in FIG 4, an ultraslim slot-in type drive device according to an exemplary embodiment of the present invention comprises a top link plate 10 and a main body 20, wherein the main body 20 is pivotally coupled with one end of the top link plate 10 via a hinge 10a.

The box-shaped top link plate 10 allows a recording medium (M) to slide into and exit from the inside of the plate through a slot 11 formed at one side of the plate. A clamp 12 for clamping the recording medium is rotatably formed within the upper portion of the top link plate 10, while the lower surface of the top link plate 10 is sectionally cut out, allowing a turntable 22 and a pickup part 23 of the main body 20 (described later) to contact the bottom surface of the recording medium.

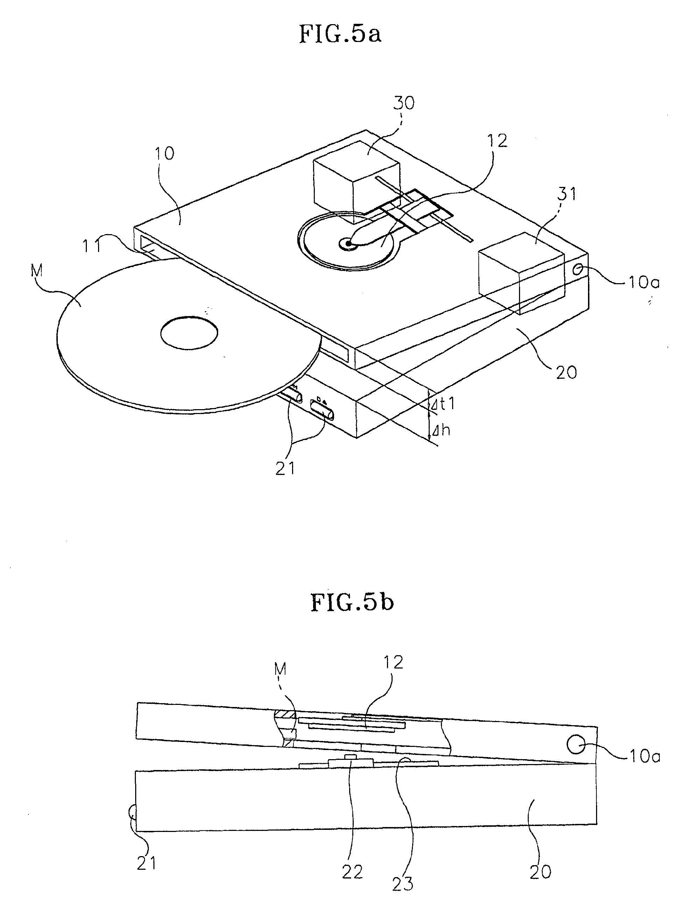

The box-shaped main body 20 is formed at the front with a plurality of manipulating buttons 21 for a functional manipulation. With reference to FIGS. 5a and 5b, the top portion of the main body 20 is formed with the turntable 22 and pickup part 23, in which the turntable 22 rotates the recording medium (M) and the pickup part 23 reads or records the data from the recording surface of the recording medium (M). The main body 20 is equipped therein with ascent and descent devices 30 and 31 for ascending and desending the top link plate 10.

The ascent and descent devices 30 and 31 may be any type of device as long as the device can lift a matter up and down by using, for instance, a lever, gear device, motor or the like.

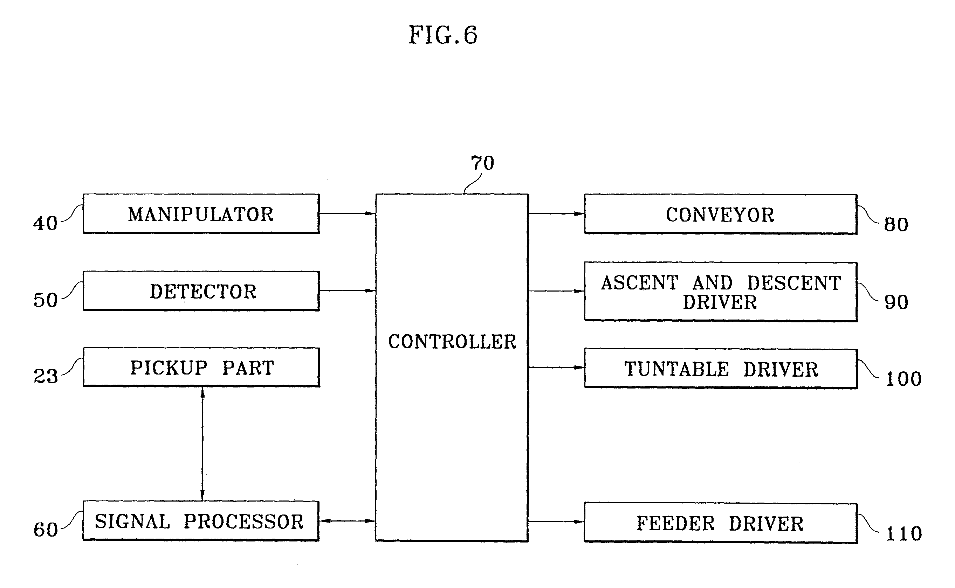

FIG 6 is a schematic block flowchart regarding the driving control circuit of the drive device, illustrated in FIG 4. The flowchart includes a manipulator 40, detector 50, signal processor 60, controller 70, conveyor 80, ascent and descent driver 90, turntable driver 100, and feeder driver 110.

After a manipulating button 21 equipped at the front of the main body 20 is manipulated, the manipulator 40 generates a corresponding manipulation signal and this signal is then inputted into the controller 70. The detector 50 detects the insertion of the recording medium (M) into the inlet of the slot 11 of the top link plate 10 and also detects the movement of the recording medium (M) towards the installation portion of the clamp 12, respectively, and generates the corresponding detection signal.

The signal processor 60 processes the signal, which is read from the recording medium (M) via the pickup part 23, and inputs the signal to the controller 70. The signal processor 60 also processes the signal of recording data outputted from the controller 70 and outputs the signal to the pickup part 23.

The controller 70 controls the pickup part 23, signal processor 60, conveyor 80, ascent and descent driver 90, turntable driver 100, and feeder driver 110 in response to the signal inputted from the manipulator 40 and detector 50.

The conveyor 80 delivers the recording medium (M) towards the clamp 12 portion when the recording medium is inserted into the inlet of the slot 11 of the top link plate 10, and likewise delivers the recording medium (M) from the clamp 12 portion to the inlet of the slot 11 according to the control of the controller 70. The conveyor 80 includes a moving device for holding and delivering the recording medium (M), and a power generating device for providing power to the moving device.

The ascent and descent driver 90 activates the ascent and descent devices 30 and 31 for ascending and descendng the top link plate 10 in response to the control of the controller 70. The turntable driver 100 activates the turntable 22 according to the control of the controller 70.

The feeder driver 110 includes a feeder, which moves the pickup part 23 to a prescribed direction in relation to the recording surface of the recording medium (M). The feeder driver 110 moves the pickup part 23 by activating the feeder according to the control of the controller 70.

The operation effect of the present invention thus constructed will now be described in detail with accompanying drawings.

Referring to FIGS. 5a and 5b, when the recording medium (M) is not installed inside the slot 11 of the top link plate 10, the top link plate 10 is ascended via the ascent and descent devices 30 and 31. That is because, once the top link plate 10 descends, the clamp 12 and turntable 22 are engaged with each other, preventing the recording medium (M) from being delivered towards the clamp 12 portion by being jammed therebetween.

When the top link plate 10 is ascended and the user pushes the recording medium (M) into the inlet of the slot 11 of the top link plate 10, the detector 50 detects it and generates a detection signal, and the controller 70 controls the conveyor 80 according to the signal.

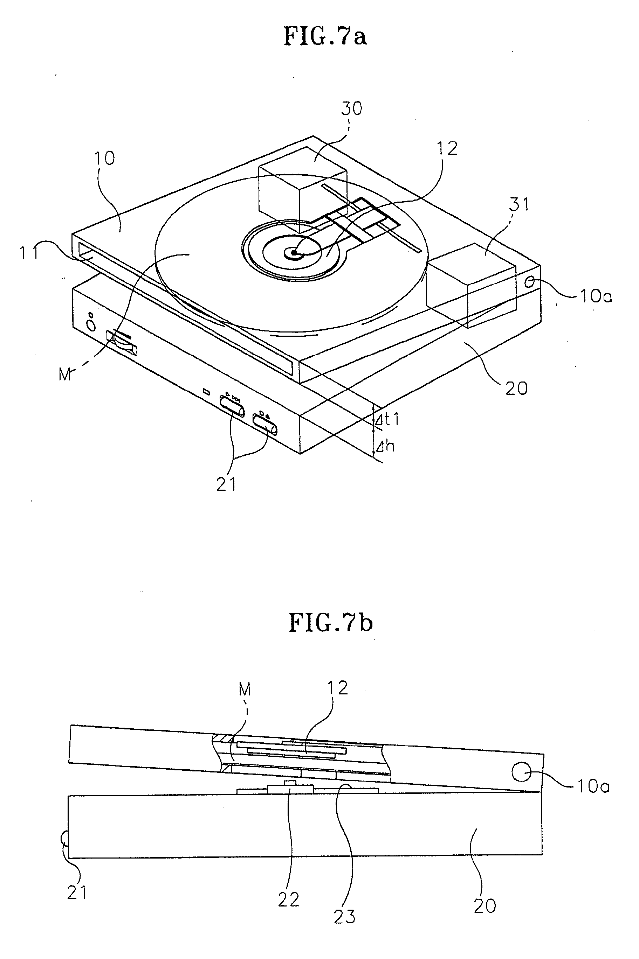

As shown in FIGS. 7a and 7b, the conveyor 80 according to the control of the controller 70 delivers the recording medium (M) to the clamp 12 portion. As the detector 50 detects the delivery of the recording medium and emits the detection signal, the controller 70 controls the ascent and descent driver 90 to lower the top link plate 10.

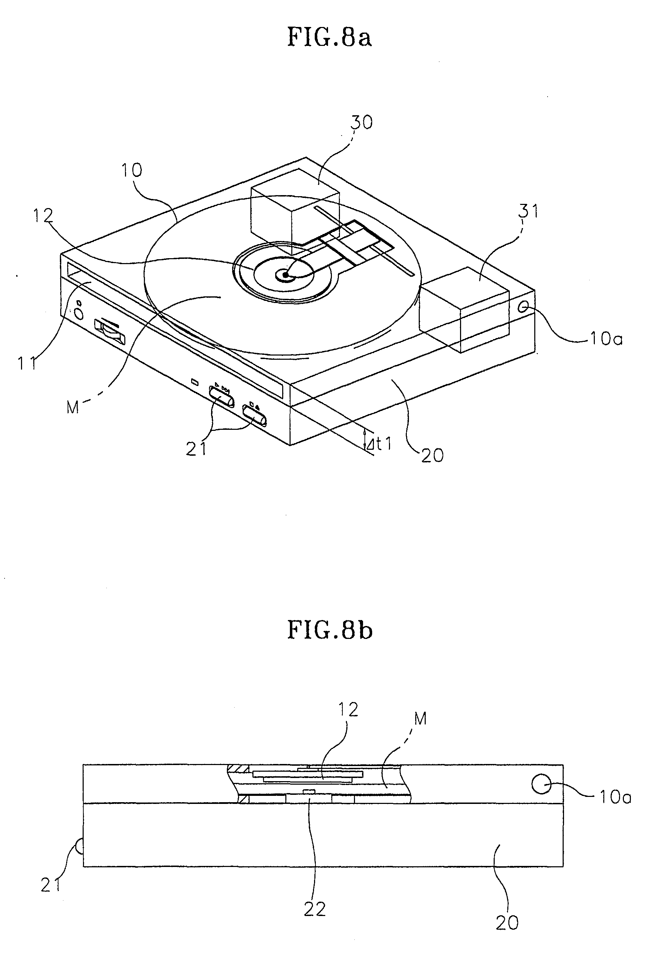

The ascent and descent driver 90 activates the ascent and descent devices 30 and 31 according to the control of the controller 70 for descending the top link plate 10, thereby the clamp 12, recording medium (M), and turntable 22 engage each other as illustrated in FIGS. 8a and 8b.

Next, the turntable 22 rotates and the recording medium (M) spins as the controller 70 controls the turntable driver 100.

The controller 70 moves the pickup part 23 by controlling the feeder driver 110, and simultaneously reads or records the signal from the recording surface of the recording medium (M) via the signal processor 60.

In case the recording medium (M) is released from the top link plate 10, the operation will inversely be processed from the insertion.

If the user manipulates a manipulation button commanding the exit of the recording medium (M) among the manipulating buttons 21 mounted at the front of the main body 20, the controller 70 stops the rotation of the turntable 22 by controlling the turntable driver 100 in response to the generation of the corresponding manipulation signal from the the manipulator 40.

Subsequently, as the controller 70 activates the ascent and descent devices 30 and 31 by controlling the ascent and descent driver 90, the top link plate 10 ascends and the recording medium (M) is released from a locked state with the clamp 12 and turntable 22. The controller 70 controls the conveyor 80 and delivers the recording medium (M) towards the inlet of the slot 11.

Thus, the exemplary embodiment of the present invention separates the top link plate 10 from the main body 20. That is, when the recording medium is inserted, the top link plate 10 is ascended for preventing the recording medium from being jammed during the movement into the slot 11. The top link plate 10 is then descended for clamping the recording medium, such that a height (Δh) required to deliver the recording medium without being caught in the slot 11 may be eliminated, enabling the device to reduce its thickness.

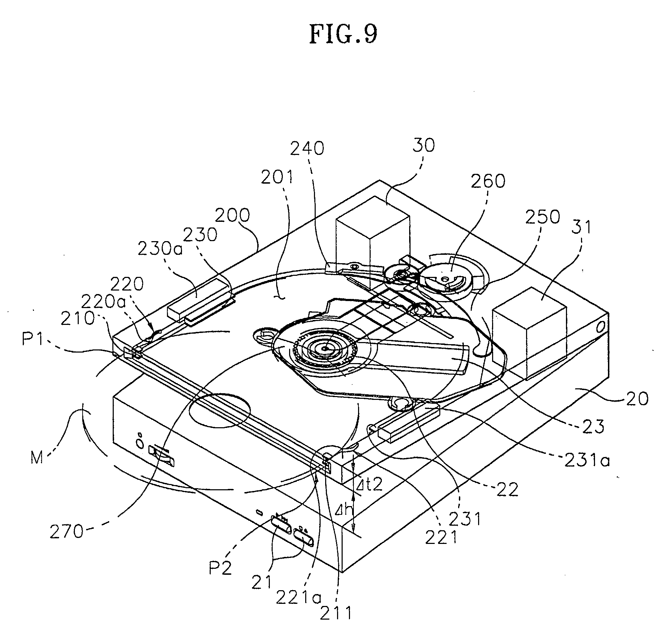

Referring to FIG 9, according to another embodiment of the present invention, the structure of a top link plate 200 in the ultraslim slot-in type drive device is different from the embodiment of FIG 4, especially, the recording medium moving mechanism of the inside of the top link plate 200. However, the structure of the main body 20 is identical to the embodiment of FIG 4. Therefore, the same element numerals are provided in relation to each construction parts of the main body 20, and thus, explanation of these elements will be omitted.

The top link plate 200 according to another embodiment of the present invention includes a pair of stoppers 210, 211 and a pair of resilient members 220, 221 at both walls of the inlet of a slot 201. A pair of guiding levers 230, 231 is mounted at both walls of the inside of the slot 201. A medium detector 240 and a disk lever 250 are mounted at one end of the inside slot 201.

The stoppers 210 and 211 made with a material having a high frictional coefficient are installed to contact with the lateral surfaces of the recording medium. Thus, when the recording medium is released, the stoppers frictionally hold and prevent the recording medium from protruding out from the slot 201 via the elasticity of resilient members 220 and 221.

The pair of resilient members 220 and 221 is designed to protrude out at one side by bending a plate spring and a resilient force is generated towards both oblique directions on the basis of the protruded parts 220a and 221 a. Each protruded part 220a and 221a is placed to be in contact with the lateral surface of the recording medium.

The pair of guiding levers 230 and 231 is respectively formed with an elongated concave groove into which the lateral surface of recording medium is inserted and guided. When the recording medium is centrally inserted and the top link plate 200 descends, the levers protruding out at all times are pulled back into the case of the lever actuating parts 230a, 231a by the lever actuating parts 230a and 231a, which operate via the controller (not shown).

The guiding levers 230 and 231 guide the recording medium for being stably delivered. Even in the event that the drive device is mounted in a vertical type and the recording medium is vertically installed, or the like, the guiding levers support the recording medium to prevent the medium from tilting or falling. Furthermore, once the top link plate 200 descends, the levers are configured to quickly be pulled inside the case of the lever actuating parts 230a and 231a for a smooth revolution of the recording medium.

The guiding levers 230 and 231 in another embodiment of the present invention interact with the top link plate 200 and recede back without the aid of a separate power generating device but via a device mechanism, which interacts with the top link plate 200 when the top link plate 200 is descended.

The medium detector 240 is equipped to lower the top link plate 200 and hold the recording medium when the recording medium is centrally inserted. The medium detector detects the complete insertion of the recording medium and inputs the detection signal to the controller and the medium detector quickly recedes back for a smooth revolution of the recording medium when the top link plate 200 is descended.

The disk lever 250 operates via a lever actuating mechanism 260, which is activated via the controller, and releases the recording medium by pushing the recording medium towards the inlet of the slot 201.

A clamp 270 for clamping the recording medium is rotatably formed within the upper portion of the top link plate 200, while the lower surface of the top link plate 200 is sectionally cut out, allowing the turntable 22 and pickup part 23 of the main body 20 to contact the bottom surface of the recording medium.

The moving method of the recording medium of the top link plate 200 according to another embodiment of the present invention will now be described.

When the user inserts and pushes the recording medium into the slot 201 of the top link plate 200, a smooth insertion of the recording medium will not be possible until both end points P1, P2 of the diameter of the recording medium pass through the protruded parts 220a, 221 a of the resilient members 220, 221 due to the inverse resilience of the resilient members 220 and 221.

However, if the user continuously presses the recording medium into the slot, both end points P1 and P2 of the diameter of the recording medium pass through the protruded parts 220a and 221a of resilient members 220 and 221 and the resilience of the resilient members 220 and 221 is applied in a positive direction, thererby the recording medium slides down into the portion of the clamp 270 of the slot 201 via the resilient force of the resilient members 220 and 221.

When the recording medium moves towards the clamp 270 by the resilience of the resilient members 220 and 221, the medium detector 240 detects the movement of the recording medium and the controller activates the ascent and descent devices 30 and 31 for descending the top link plate 200.

Next, the controller activates the lever actuating parts 230a and 231a in order to pull the guiding levers 230 and 231 into the case of the lever actuating parts 230a and 231a to prevent any interruption of the revolution of the recording medium, and then the turntable 22 and pickup part 23 start their operation.

On the other hand, if the user manipulates a manipulation button to command the exit of the recording medium among the manipulating buttons 21 of the front of the main body 20, the controller detects the command signal and ceases the rotation of the turntable 22 and activates the lever actuating parts 230a and 231a to allow the guiding levers 230 and 231 to be restored to their original positions. The recording medium is guided and then the top link plate 200 ascends by the operation of the ascent and descent devices 30 and 31.

As the controller activates the lever actuating mechanism 260, the disk lever 250 rotates towards the inlet of the slot 201 and pushes the recording medium to lead both end points P1 and P2 of the diameter of the recording medium to pass through the protruded parts 220a and 221 a of the resilient members 220 and 221.

Provided that both end points P1 and P2 of the diameter of the recording medium pass through the protruded parts 220a and 221a of the resilient members according to the operation of the disk lever 250, the resilience of the resilient members 220 and 221 is applied inversely, and the recording medium is pulled out towards the inlet direction of the slot 201 by the resilient force of the resilient members 220 and 221.

As a result of the resilient force of the stoppers 210 and 211 mounted at the inlet of the slot 201, the recording medium does not protrude out from the slot 201 but is held at the inlet of the slot 201.

The second embodiment of the present invention utilizes elastic force from the resilient member rather than a moving mechanism using electrical power for delivering the recording medium, thus making it possible for this embodiment to be reduced in thickness compared to the embodiment of FIG 4, which adopts the power moving mechanism (Δt0>Δt1>Δt2).

The moving mechanism using electrical power to deliver the recording medium requires a holder for holding the recording medium at both sides, a roller for carrying the medium, and a power transmitting device for activating the holder and roller, thus requiring a certain additional thickness. On the other hand, the second embodiment of the present invention may be performed without recourse to the holder, roller and power transmitting devices, but a certain amount of space would be required to permit the recording medium to slide into the slot, resulting in a thinner device.

The present invention is not limited to the embodiments described above but may be varied and modified in the scope of the present invention.

As apparent from the foregoing, the top link plate is separated from the main body in the present invention such that when the recording medium is inserted into the slot of the top link plate, the top link plate is in an ascent state to prevent the recording medium from being jammed in the slot during the movement, and then the top link plate descends to clamp the recording medium. Therefore, no additional height is required for permitting the recording medium to be inserted into the slot without being caught therein and the device is greatly reduced in thickness.

In another embodiment of the present invention, the moving mechanism constructed to move the recording medium via resilient force of the resilient member is provided without actual use of a holder for holding the recording medium, a roller for moving the medium, and a power transmitting device for activating the holder and roller, thus contributing to a narrower space for delivering the recording medium and diminished overall thickness of the device.

## Claims

1. An ultraslim slot-in type drive device adapted to insert or release a disk type recording medium through a slot, comprising:
a top link plate having a slot at one side through which a recording medium is inserted and exited, and having a clamp for clamping said recording medium;
a main body separated from said top link plate and having a rotating means for rotating said recording medium;
control means configured to control said top link plate to descend by detecting the insertion of said recording medium into said top link plate and to activate said rotating means, and also configured to control said top link plate to ascend according to the input of the signal commanding the exit of said recording medium and to stop the activation of said rotating means; and
ascent and descent means for coupling said top link plate to said main body for vertical movement and ascending and descending said top link plate according to the control of said control means.

2. The device as defined in claim 1, wherein said ascent and descent means includes:
a hinge coupling part pivotally fixing said top link plate to one end of said main body;
an ascent and descent device for pivoting said top link plate from said main body; and
an ascent and descent driver for activating said ascent and descent device according to the control of said control means.

3. The device as defined in claim 1 or 2, wherein said top link plate includes:
moving means for carrying said recording medium between the inlet and the inside of said slot, wherein said moving means includes:
a resilient member equipped at the inside wall of the inlet of said slot and having a protruded part configured to generate resilient force toward both oblique directions and to contact the lateral surface of said recording medium, wherein said both oblique parts are disposed to face the inlet and the inside of said slot, respectively; and
lever means for pushing out said recording medium from the inside of said slot to the inlet direction.

4. The device as defined in claim 3, wherein the inlet of said slot is further mounted with a stopper made with a material having a high frictional coefficient and being in contact with the lateral surface of said recording medium.

5. The device as defined in claim 3, wherein the inside of said slot is further mounted with a guiding means having a concave groove into which the lateral surface of said recording medium is inserted and slid.

6. The device as defined in claim 5, wherein said guiding means includes:
a guiding lever having a concave groove; and
a lever actuating part for pulling back or restoring said guiding lever to the original position by activating said guiding lever.
